# EUROPEAN PATENT APPLICATION

(11) **EP 1 598 691 A1**
(43) Date of publication of application: **23.11.2005**
(21) Application number: 04252864.6
(22) Date of filing: 17.05.2004
(51) Int. Cl.: G02C 11/06, H04M 1/725, H04M 1/60

(54) **Eyewear comprising multimedia device and multimedia device to be mounted on eyewear**

(71) Applicant: Inspecs Ltd., Bath BA2 7RW (GB)
(72) Inventor: Lin, Wendy, Taipei City (TW); Totterman, Robin, Bath BA2 7RW (GB)
(74) Representative: Pluckrose, Anthony William

(57) **Abstract**

An eyewear apparatus has at least one supporting arm and assistant arm. One end of the supporting arm is coupled to a glass frame of the eyewear apparatus, and another end of the supporting arm is placed below an ear of a user. In addition, one end of the assistant arm is coupled to the supporting arm between two ends thereof, and another end of the assistant arm is placed upon the ear of the user. Besides, wireless device is embedded in the supporting arm while an earphone is placed in the end of the assistant arm so that the user is able to use wireless phone without wearing additional device.

## Description

### BACKGROUND OF THE INVENTION

### Field of Invention

The present invention relates to an eyewear structure. More particularly, the present invention relates to an eyewear structure that carries an electronic device.

### Description of Related Art

Sight vision is important to human. However, diseases or undue use of eyes often cause nearsightedness or other problems. Many kinds of eyeglasses are developed to help people who have such problems. In addition to medical reasons, other glasses are also developed. For example, sunglasses are utilized for stopping strong sunshine, and no-lens eyeglasses are utilized for improving appearance of human faces. Hence, even medical laser surgery for curing eyesight has entered the market, there is no doubt that eyeglasses will stay in the world around us.

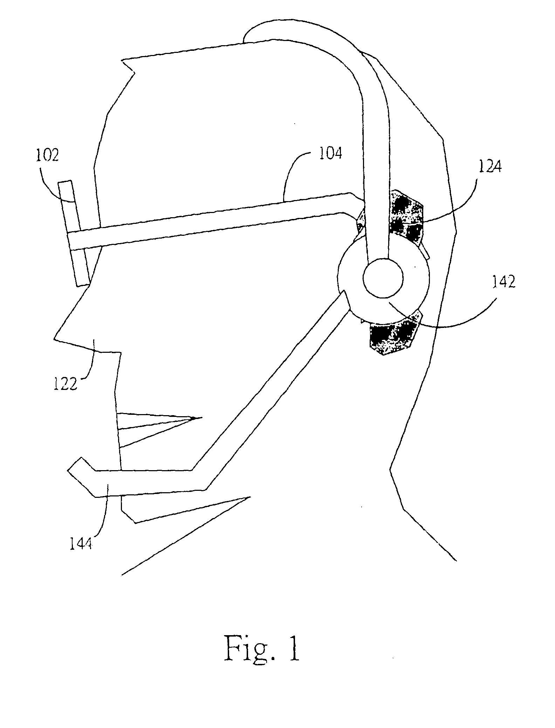

Fig. 1 illustrates a common type of eyeglasses. The nose 122 of a user is used for supporting a frame module 102 of an eyeglass that hold lens, and the ear 124 of the user is used for supporting a supporting arm 104 of the eyeglass. This eyeglass utilizes both the ears and the nose providing supporting points. However, two kinds of inconvenience occur in such design.

Firstly, the supporting arm 104 is only below two ears of the user, and when the user exercises violently, the eyeglass might move or fall. Secondly, if the user wears an additional earphone 142 or microphone 144, the earphone 142 or the microphone 144 collide with the supporting arm 104, which brings inconvenience and even makes the user feel uncomfortable.

Wireless phones and MP3 players are more and more popular nowadays. Thus, it is more and more important to design a better device to help people who wear eyeglasses feel more comfortable when they also wear other devices at their heads.

### SUMMARY OF THE INVENTION

It is therefore an objective of the present invention to provide an eyewear structure that makes users feel more comfortable and convenient when they want to use additional electronic devices.

It is another objective to design a multimedia accessory that can be used in eyeglasses so that users feel more comfortable and convenient when they have to wear eyeglasses.

In accordance with the foregoing and other objectives of the present invention, an eyewear structure is disclosed and the eyewear structure includes a frame module for holding lens, at least one supporting arm and at least one assistant arm. A first end of the supporting arm is coupled to the frame module, and a second end of the supporting arm is placed below an ear of a user when the user wears the eyewear structure. In addition, the assistant arm is coupled between the first end and the second end of the supporting arm, and the assistant arm relative to the supporting arm protrudes to a place upon the ear of the user.

Additionally, there is container in the supporting arm for placing electronic devices, like wireless transceivers. For example, bluetooth modules are placed in such supporting arm. At the same time, an earphone or other electronic circuit is placed in the assistant arm.

Besides, the assistant arm can be produced by a tube that has malleability. Other methods to implement the assistant arm includes providing a tuning mechanism, e.g. by shifting, folding, or rotating the assistant arm. With such mechanism, the eyeglass structure is easier to be collected and used.

Hence, there are at least following advantages of the present invention. Firstly, the assistant arm and the supporting arm are on different sides of one ear of the user forming a cross structure that makes wearing of the eyeglass more securely. Secondly, the assistant arm protrudes relative to the supporting arm to a place upon the ear, and an earphone can be placed at the place of the assistant arm, which means the user does not have to wear additional earphones, which often collides with the eyeglass. Thirdly, the assistant arm can be collected to save space by the tuning mechanism, and therefore, eyeglass according to the present invention is also easy to carry and use when the user does not need to use electronic devices like the earphone.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 illustrates normal equipments carried around the head of an user;
Fig. 2(a) illustrates a side view schematic diagram of the first embodiment;
Fig. 2(b) illustrates another view of Fig. 2(a);
Fig. 3(a) illustrates an example of the assistant arm;
Fig. 3(b) illustrates another status of Fig. 3(a);
Fig. 4(a) illustrates an example of the assistant arm;
Fig. 4(b) illustrates another status of Fig. 4(a);
Fig. 5(a) illustrates an example of the assistant arm;
Fig. 5(b) illustrates another status of Fig. 5(a);
Fig. 6(a) illustrates an example of the assistant arm;
Fig. 6(b) illustrates another status of Fig. 6(a);
Fig. 6(c) illustrates a schematic diagram showing movement of the assistant arm relative to the supporting arm;
Fig. 7(a) illustrates a second embodiment that are not assembled yet; and
Fig. 7(b) illustrates a second embodiment that are assembled.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

### First embodiment

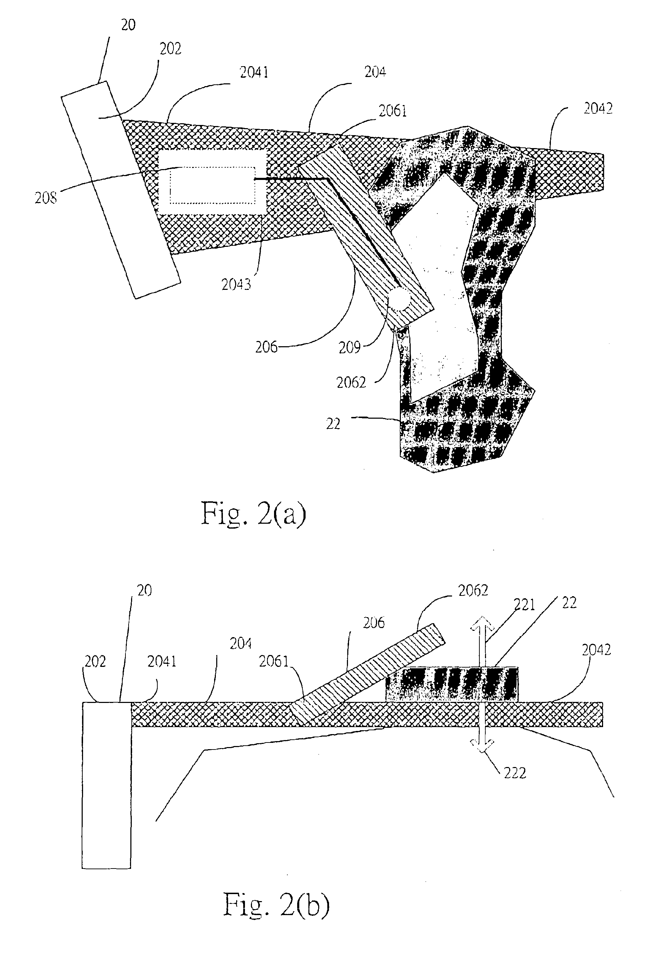

Fig. 2(a) and Fig. 2(b) illustrate different views of a eyewear structure 20. The eyewear structure 20 has a frame module 202 for holding lens, at least one supporting arm 204 and an assistant arm 206. As mentioned above, eyeglasses for two eyes need two arms. These arms can be both of the type of the illustrated supporting arm 204 with the assistant arm 206 or, only one arm is of the type of the illustrated supporting arm 204 with the assistant arm 206. In addition, the frame module 202 is used as a general term that describes every kind of frames that hold lens, and even describes for the frame of no-lens eyeglasses.

A first end 2041 of the supporting arm 204 is coupled to the frame module 202. In addition, when a user wears the eyewear structure 20, a second end of the supporting arm 2042 is placed below an ear of the user.

Besides, a first end 2061 of the assistant arm 206 is coupled between the first end 2041 and the second end 2042 the supporting arm 204. The assistant arm 206 also extrudes relative to the supporting arm 204 to a place 221 upon the ear 22 of the user.

In other words, the eyewear structure 20 forms a cross structure on the upper place 221 and the lower place 222 of the ear 22. Even the assistant arm 226 does not tightly fit to the ear 22, the eyewear structure 22 keep itself not leaving over a certain range from the ear 22, which means the user is able to wear such eyewear structure 22 more securely.

Further, a container 2043 is prepared in the supporting arm 204 for containing an electronic device 208, e.g. a bluetooth chip or other wireless modules. The second end 2062 of the assistant arm 206 is used to place an earphone or other audio output device 209. All such features make the eyewear structure 20 more powerful.

It is to be noted that the electronic device 208 can also include audio capture circuits, video capture circuits, and even charging circuits beyond a simple earphone. To equip such electronic apparatuses, the first end 2041 of the supporting arm 204 is wider then the second end 2042 of the supporting arm 204. With such design, a larger space of the container 2043 is obtained. At the same time, the whole structure is more reliable because of the larger contact area between the first end 2041 of the supporting arm 204 and the frame module 202.

Another feature to be added to the eyewear structure 20 is to design a tuning mechanism so that the assistant arm 206 can be collected when the assistant arm 206 is not used. Several designs are provided below as examples.

### Example 1: a tube with malleability

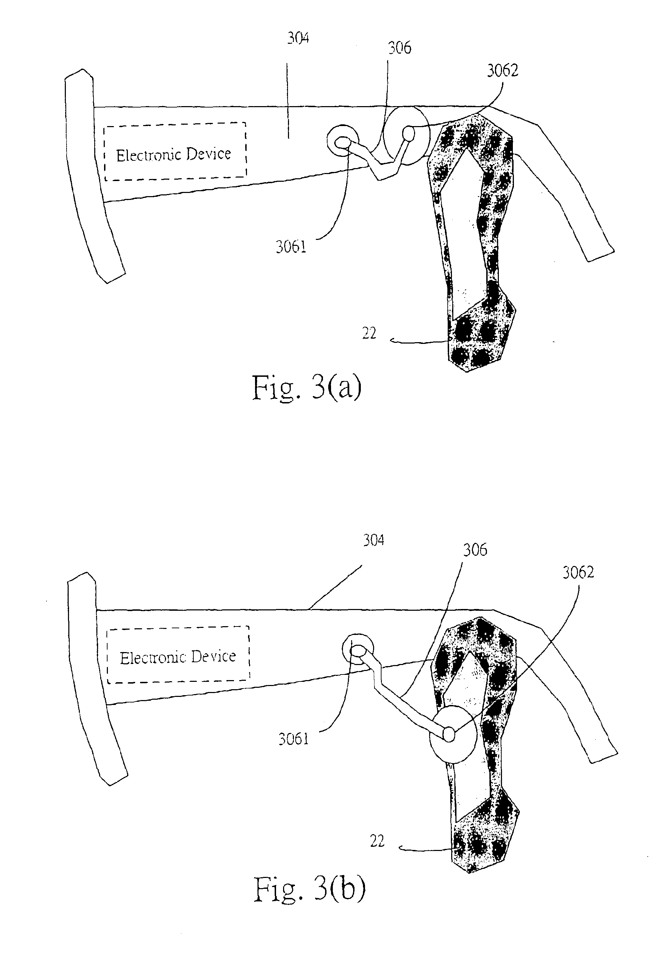

Fig. 3(a) and Fig. 3(b) illustrate two statuses of using and not using the assistant arm 306. The first end 3061 of the assistant arm 306 is coupled to the supporting arm 304, and the second end 3062 of the assistant arm 306 protrudes to a place upon the ear 22 of the user. When not using the assistant arm 306, the user folds the assistant arm 306 that has malleability to a place near the supporting arm 304, as shown in Fig. 3(a). In the other hand, when the user wants to use the assistant arm 306, e.g. to use the earphone placed in the second end 3062 of the assistant arm 306, the user folds the assistant arm 304 to a place upon the ear 22.

A tunable tube can used to implement such assistant arm 306, e.g. a metal tube that covers plastic or not. Of course, other materials that have malleability can be used to implement the assistant arm 306.

### Example 2: rotatable coupling

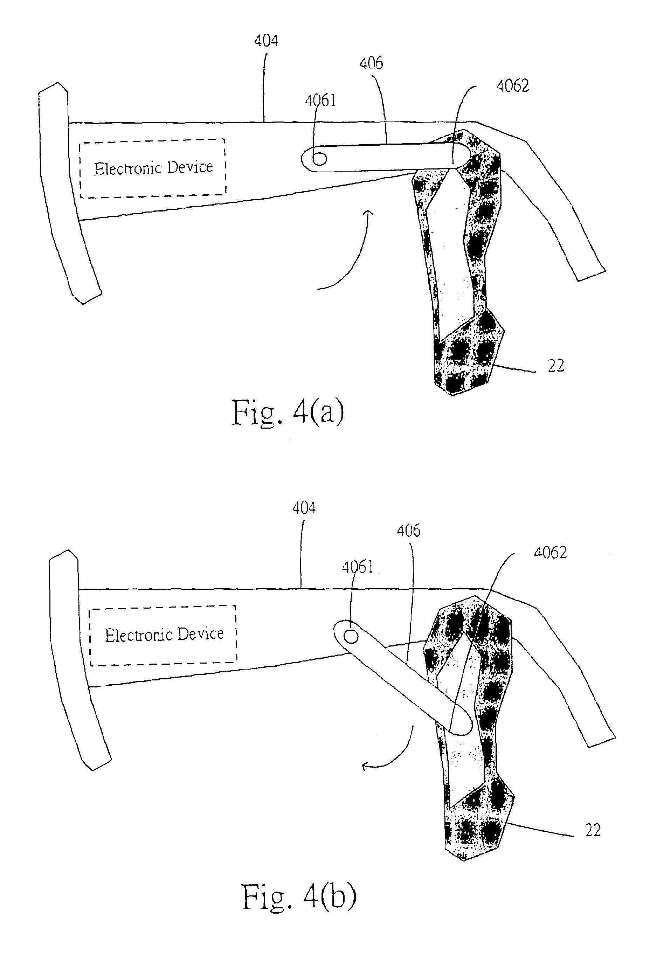

Fig. 4(a) and Fig. 4(b) illustrate another design for collecting the assistant arm 406. The first end 4061 of the assistant arm and the supporting arm 404 are rotatably coupled so that the first end 4061 of the assistant arm 406 rotates relative to the supporting arm 404.

When not using the assistant arm 406, the user rotates the assistant arm 406 to a place almost parallel to the supporting arm 404. In the other hand, when using the assistant arm 406, the user rotates the second end 4062 of the assistant arm 406 to a place upon the ear 22 of the user.

### Example 3: shifting

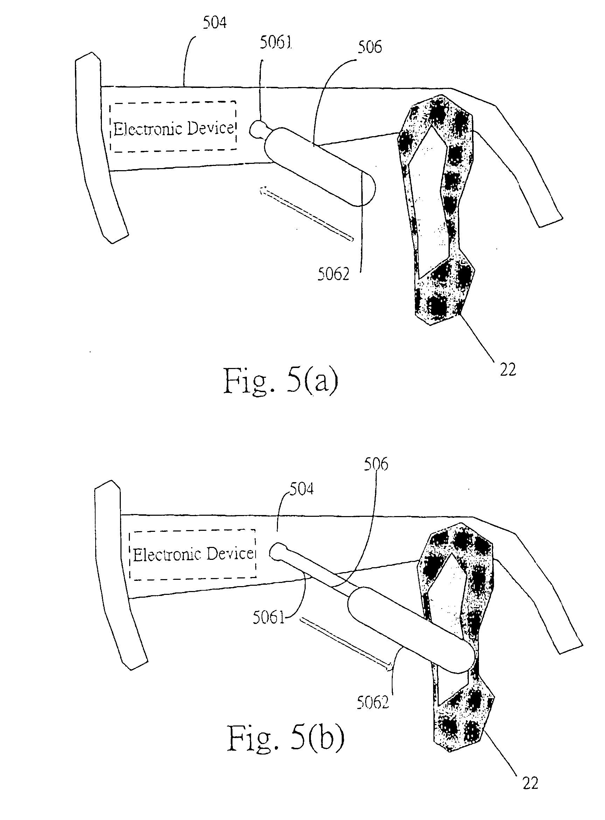

Fig. 5(a) and Fig. 5(b) illustrate another design for collecting the assistant arm 506. The assistant arm 506 is composed of a first part 5061 and a second part 5062. The first part 5061 is coupled to the supporting arm 504, and the second part 5062 is coupled to the first part 5061 in a manner that the second part 5062 is able to shift relative to the first part 5061. For example, a track is provided in the first part 5061 so that the second part 5062 moves on the track.

When not using the assistant arm 506, the second part 5062 of the assistant arm 506 is shifted relative to the first part 5061 to collect the assistant arm 506. In the other hand, when using the assistant arm 506, the user shifts the second part 5062 relative to the first part 5061 to a place upon the ear 22.

### Example 4: folding

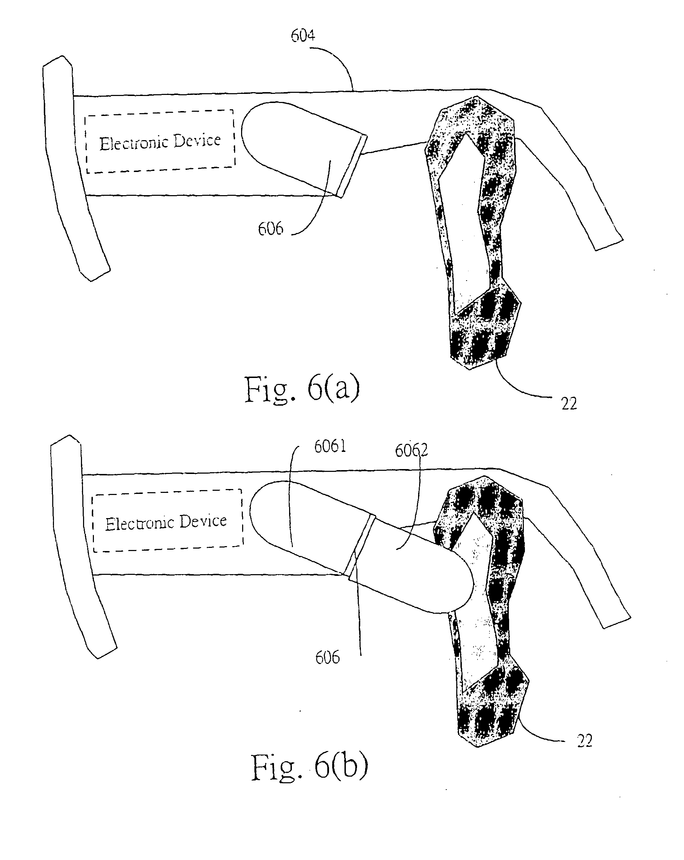

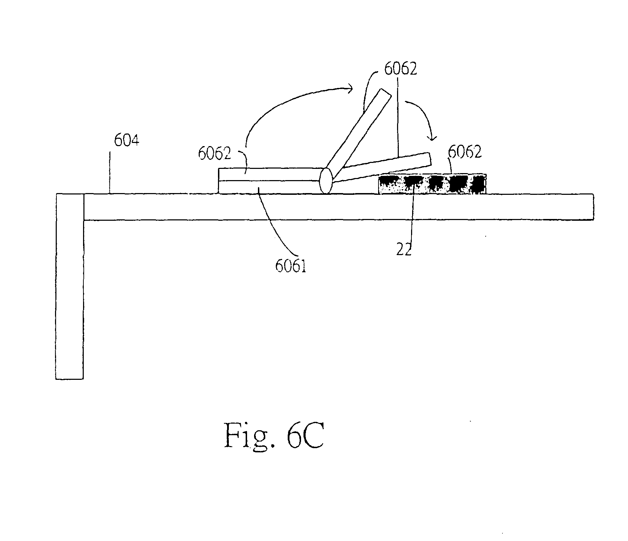

Fig. 6(a), Fig. 6(b), and Fig. (c) illustrate another design for collecting the assistant arm 606. The assistant arm includes a first part 6061 and a second part 6062 and the firs part 6061 and the second part 6062 are coupled in a manner that they can be folded. At the same time, the first part 6061 is coupled to the supporting arm 604.

When not using the assistant arm 606, the user folds the second part 6062 of the assistant arm 606 relative to the first part 6061. In the other hand, when using the assistant arm 606, the user folds the second part 6062 of the assistant arm 606 relative to the first part 6061 in a opposite direction so that the second part 6062 is upon the ear 22.

### Second Embodiment

In the above description, the supporting arm and the assistant arm are produced together with the frame module. However, based on the same inventive concept, a multimedia accessory module composed of the portion of the container for containing the electronic device and the assistant arm can be made independently. After then, users put such multimedia accessory module to their eyeglasses.

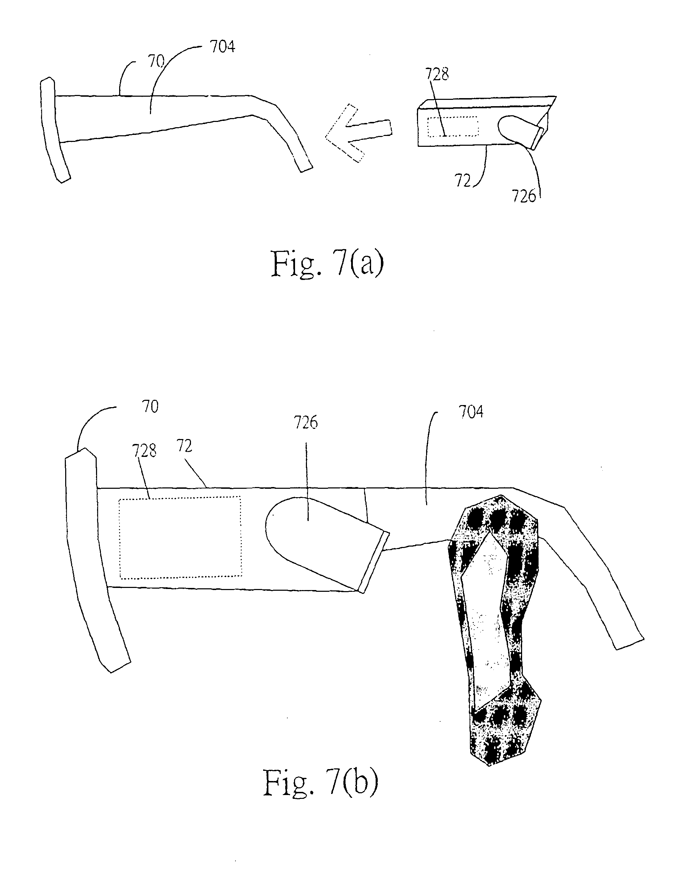

For example, Fig. 7(a) and Fig. 7(b) illustrate assembling one multimedia accessory module 72 to an eyeglass 70. The multimedia accessory module 72 has one assistant arm 726 that is attached to the supporting arm 704 of the eyeglass 70. There is a container in the multimedia accessory module so that blooth chips, wireless tranceivers/receivers, or other electronic devices 728 can be placed within. Users choose such kind of multimedia accessory module 72 and assemble to their original eyeglasses 70, and turn their normal eyeglasses 70 into new eyeglasses having inventive feature as mentioned above.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An eyewear structure comprising:
a frame module for holding lens;
at least one supporting arm having a first end coupled to the frame module and a second end placed below an ear of a user when the user wears the eyewear structure; and
at least one assistant arm coupled between the first end and the second end of the supporting arm, and the assistant arm protruding relative to the supporting arm to a place upon the ear of the user.

2. The eyewear structure of claim 1, wherein the supporting arm has a container for containing an electronic device.

3. The eyewear structure of claim 2, wherein the electronic device comprises a wireless receiver module for receiving a wireless signal.

4. The eyewear structure of claim 3, wherein the electronic device comprises a bluetooth chip.

5. The eyewear structure of claim 3, wherein a first end of the assistant arm is coupled to the supporting arm and an audio output device coupled to the wireless module is placed in a second end of the assistant arm for outputting audio output according to the wireless signal.

6. The eyewear structure of claim 2, wherein the first end of the supporting arm has a larger width then the second end of the supporting arm and the container is placed near the first end of the supporting arm.

7. The eyewear structure of claim 1, wherein the assistant arm has malleability so that the user adjusts a protruding manner of the assistant arm relative to the supporting arm.

8. The eyewear structure of claim 7, wherein the assistant arm comprises a adjustable tube for providing the malleability.

9. The eyewear structure of claim 1, wherein the assistant arm comprises a tuning mechanism for tuning the assistant arm.

10. The eyewear structure of claim 9, wherein the tuning mechanism is of rotatably coupling the supporting arm and the assistant arm.

11. The eyewear structure of claim 9, wherein the tuning mechanism is of building the assistant arm in a first part and a second part, the user shifting the second part relative to the first part so that to take in the assistant arm.

12. The eyewear structure of claim 9, wherein the tuning mechanism is of building the assistant arm in a first part and a second part, the user folding the second part against the first part so that to take in the assistant arm.

13. The eyewear structure of claim 2, wherein the electronic device comprises an audio capture circuit.

14. The eyewear structure of claim 2, wherein the electronic device comprises an image capture circuit.

15. The eyewear structure of claim 2, wherein the electronic device comprises a charging circuit.

16. A multimedia accessory for an eyewear glass, the eyewear glass having a frame module for holding lens, at least one supporting arm having a first end coupled to the frame module and a second end placed below an ear of a user, comprising:
a base housing for attaching between the first end and the second end of the supporting arm;
an electronic device placed in the base housing; and
an assistant arm coupled to the base housing, the assistant arm relative to the supporting arm protruding to a place upon the ear of the user.

17. The multimedia accessory of claim 16, wherein the electronic device comprises a wireless module for receiving a wireless signal.

18. The multimedia accessory of claim 17, wherein the wireless module comprises a bluetooth chip.

19. The multimedia accessory of claim 16, wherein a first end of the assistant arm is coupled to the supporting arm and an audio output device coupled to the wireless module is placed in a second end of the assistant arm for outputting audio output according to the wireless signal.

20. The multimedia accessory of claim 16, wherein the first end of the supporting arm has a larger width then the second end of the supporting arm and the container is placed near the first end of the supporting arm.

21. The multimedia accessory of claim 16, wherein the assistant arm has malleability so that the user adjusts a protruding manner of the assistant arm relative to the supporting arm.

22. The multimedia accessory of claim 21, wherein the assistant arm comprises a adjustable tube for providing the malleability.

23. The multimedia accessory of claim 16, wherein the assistant arm comprises a tuning mechanism for tuning the assistant arm.

24. The multimedia accessory of claim 23, wherein the tuning mechanism is of rotatably coupling the supporting arm and the assistant arm.

25. The multimedia accessory of claim 23, wherein the tuning mechanism is of building the assistant arm in a first part and a second part, the user shifting the second part relative to the first part so that to take in the assistant arm.

26. The multimedia accessory of claim 23, wherein the tuning mechanism is of building the assistant arm in a first part and a second part, the user folding the second part against the first part so that to take in the assistant arm.

27. The multimedia accessory of claim 16, wherein the electronic device comprises an audio capture circuit.

28. The multimedia accessory of claim 16, wherein the electronic device comprises an image capture circuit.

29. The multimedia accessory of claim 16, wherein the electronic device comprises a charging circuit.

## Amended claims

### Amended claims in accordance with Rule 86(2) EPC.

**1.** An eyewear structure comprising:
a frame module for holding lens;
at least one supporting arm having a first end coupled to the frame module and a second end placed below an ear of a user when the user wears the eyewear structure;
at least one assistant arm having a first part coupled between the first end and the second end of the supporting arm and a second part protruding relative to the supporting arm to a place upon the ear of the user, so that the assistant arm can be taken in; and
an audio output device, for outputting an audio signal, in the second part of the assistant arm.

**2.** The eyewear structure of claim 1, wherein the second part of the assistant arm can be shifted relative to the first part of the assistant arm.

**3.** The eyewear structure of claim 1, wherein the second part of the assistant arm can be folded against the first part of the assistant arm.

**4.** The eyewear structure of claim 1, 2, or 3, wherein the supporting arm has a container for containing an electronic device.

**5.** The eyewear structure of claim 4, wherein the electronic device comprises a wireless receiver module for receiving a wireless signal.

**6.** The eyewear structure of claim 4, wherein the electronic device comprises a bluetooth chip.

**7.** The eyewear structure of claim 4, wherein the electronic device comprises an audio capture circuit.

**8.** The eyewear structure of claim 4, wherein the electronic device comprises an image-capture circuit.

**9.** The eyewear structure of claim 4, wherein the electronic device comprises a charging circuit.
